# EUROPÄISCHE PATENTANMELDUNG

(11) **EP 2 363 929 A2**
(43) Veröffentlichungstag der Anmeldung: **07.09.2011**
(21) Anmeldenummer: 11001329.9
(22) Anmeldetag: 17.02.2011
(51) Int. Cl.: H01T 13/20, H01T 13/54, H01T 21/02

(54) **Vorkammerzündkerze**

(30) Priorität: 04.03.2010 DE 102010010109
(71) Anmelder: MULTITORCH GMBH, 74889 Sinsheim (DE)
(72) Erfinder: Maul, Georg, 88410 Bad Wurzach (DE); Äsold, Jens, 74189 Weinsberg (DE); Sailer, Uwe, 74889 Sinsheim (DE); Kuhnert, Dieter, 74889 Sinsheim (DE)

(57) **Zusammenfassung**

Die Erfindung betrifft eine Vorkammerzündkerze mit einem Gehäuse (1), das an seinem vorderen Ende eine Vorkammer (3) mit mehreren Öffnungen (4) aufweist, einem in dem Gehäuse (1) angeordneten Isolator (5), einer von dem Isolator (5) umgebenen Mittelelektrode (6), die eine in der Vorkammer (3) angeordnete Zündelektrode trägt, die mehrere Elektrodenarme (7) aufweist, wobei die Elektrodenarme (7) jeweils einen hinteren Abschnitt (7a), der sich quer zur Längsrichtung der Mittelelektrode (6) erstreckt, und einen entlang einer Vorkammerwand (3a) verlaufenden vorderen Abschnitt (7b), der zwischen sich und der Vorkammerwand (3a) eine Funkenstrecke bildet, aufweisen. Erfindungsgemäß ist vorgesehen, dass die Elektrodenarme (7) in die Mittelelektrode (6) eingebettet sind und aus einer Seitenfläche der Mittelelektrode (6) herausragen. Die Erfindung betrifft ferner ein erfindungsgemäßes Verfahren.

## Beschreibung

Die Erfindung geht aus von einer Vorkammerzündkerze mit den im Oberbegriff des Anspruchs 1 angegebenen Merkmalen, wie sie aus der EP 0 675 272 A1 bekannt ist.

Eine solche Vorkammerzündkerze hat ein Gehäuse, das an seinem vorderen Ende eine Vorkammer mit mehreren Öffnungen aufweist. Mit einer Bogenentladung kann ein Kraftstoff-Luft-Gemisch in der Vorkammer entzündet werden, so dass aus den Öffnungen der Vorkammer brennendes Gasgemisch als sogenannte Fackelstrahlen austritt und Kraftstoff-Luft-Gemisch im Brennraum eines Motors entzündet.

In dem Gehäuse einer Vorkammerzündkerze ist ein Isolator angeordnet, der eine Mittelelektrode trägt. Die Mittelelektrode wird bei Vorkammerzündkerzen manchmal auch als Elektrodenträger bezeichnet, da sie eine in der Vorkammer angeordnete Zündelektrode trägt. Die Zündelektrode hat mehrere, in der Regel vier, Elektrodenarme, die sich ausgehend von der Mittelelektrode zunächst radial auswärts erstrecken und mit einem anschließenden Abschnitt entlang einer Vorkammerwand verlaufen. Dieser vordere Abschnitt der Elektrodenarme bildet zwischen sich und der Vorkammerwand eine Funkenstrecke für eine Bogenentladung.

Ein Vorteil von Vorkammerzündkerzen ist ihre im Vergleich zu anderen Zündkerzentypen hohe Lebensdauer und ein sehr gutes Zündverhalten. Diese Vorteile beruhen unter anderem darauf, dass die Zündelektrode mehrere Elektrodenarme aufweist, die jeweils einen Lichtbogen erzeugen können.

Aufgabe der vorliegenden Erfindung ist es, einen Weg aufzuzeigen, wie sich die Lebensdauer von Vorkammerzündkerzen noch weiter verbessern lässt.

Diese Aufgabe wird durch eine Vorkammerzündkerze mit den im Anspruch 1 angegebenen Merkmalen gelöst. Vorteilhafte Weiterbildungen der Erfindung sind Gegenstand von Unteransprüchen.

Bei einer erfindungsgemäßen Vorkammerzündkerze sind die Elektrodenarme in die Mittelelektrode eingebettet und treten seitlichen aus der Mittelelektrode aus. Im Vergleich zu dem üblichen Aufschweißen der Zündelektrode auf die Mittelelektrode wird dadurch überraschenderweise eine Verbesserung der Lebensdauer der Zündkerze erzielt. Dies wird darauf zurückgeführt, dass durch das erfindungsgemäße Einbetten der Elektrodenarme in die Mittelelektrode eine vergrößerte Kontaktfläche zwischen der Zündelektrode und der Mittelelektrode geschaffen wird. Dies ermöglicht eine verbesserte Wärmeabfuhr von der Zündelektrode zu der Mittelelektrode. Zudem kann auch die mechanische Verbindung zwischen Zündelektrode und Mittelelektrode wesentlich verbessert werden, indem das Material der Mittelelektrode einen eingebetteten Abschnitt der Zündelektrode umschließt und auf diese Weise einen Formschluss zwischen Zündelektrode und Mittelelektrode erzeugt.

Bei einer erfindungsgemäßen Vorkammerzündkerze kann ein in die Mittelelektrode eingebetteter Abschnitt der Elektrodenarme vollständig von Material der Mittelelektrode bedeckt sein. Um die beschriebenen Vorteile der Erfindung zu nutzen, ist dies jedoch nicht zwingend erforderlich. Beispielsweise können die Elektrodenarme aus Runddraht sein und ein schmaler streifenförmiger Bereich des Runddrahts unbedeckt bleiben. Sofern die Breite des unbedeckten Streifens kleiner als der Drahtdurchmesser ist, kann dennoch ein formschlüssiges Einbetten erreicht werden, da das Material der Mittelelektrode um die breiteste Stelle des eingebetteten Runddrahts herum greift. Zum Einpressen der Zündelektrode kann ein Stempel verwendet werden. Beim Einpressen berührt der Stempel die Elektrodenarme in einem streifenförmigen Bereich. Dieser streifenförmige Kontaktbereich der Elektrodenarme mit dem Stempel kann von der Mittelelektrode unbedeckt bleiben.

Bevorzugt ist also, dass ein in die Mittelelektrode eingebetteter Abschnitt der Elektrodenarme teilweise oder vollständig von Material der Mittelelektrode bedeckt ist. Bei dem bedeckenden Material kann es sich um Material der Mittelelektrode handeln, das als Schmelze beim Einpressen der Zündelektrode verdrängt wurde, und/oder um Material der Mittelelektrode das nach dem Einpressen der Zündelektrode an seinem ursprünglichen Platz ist.

Bevorzugt wird die Zündelektrode soweit eingepresst, dass eine dem hinteren Ende der Mittelelektrode zugewandte Unterseite der Elektrodenarme dort, wo die Elektrodenarme aus der Seitenfläche der Mittelelektrode herausragen, von dem vorderen Ende der Mittelelektrode mehr als die Hälfte der Dicke der Elektrodenarme entfernt ist. Die Dicke der Elektrodenarme ist dabei in Längsrichtung der Mittelelektrode, zu messen. Besonders bevorzugt ist die Unterseite der Elektrodenarme dort, wo die Elektrodenarme aus der Seitenfläche der Mittelelektrode herausragen, von dem vorderen Ende der Mittelelektrode mehr als zwei Drittel der Dicke, besonders bevorzugt mehr als drei Viertel der Dicke, insbesondere mehr als vier Fünftel der Dicke der Elektrodenarme entfernt.

Die Erfindung betrifft ferner ein Verfahren zum Befestigen einer Zündelektrode an einer Mittelelektrode einer Vorkammerzündkerze mit den im Anspruch 10 angegebenen Merkmalen. Bei diesem Verfahren wird eine Stirnfläche der Mittelelektrode auf eine Temperatur aufgeheizt, die zum Aufschmelzen des Materials der Mittelelektrode ausreicht, aber unterhalb der Schmelztemperatur des Materials der Zündelektrode liegt. Die Zündelektrode wird dann soweit in das aufgeschmolzene Material der Mittelelektrode eingepresst, bis die Elektrodenarme auf dem größten Teil ihres Umfangs von Material der Mittelelektrode umschlossen sind und aus einer Seitenfläche der Mittelelektrode herausragen.

Bevorzugt wird die Zündelektrode soweit in das aufgeschmolzene Material der Mittelelektrode eingepresst, bis die eingebetteten Abschnitte der Elektrodenarme von Material der Mittelelektrode bedeckt sind. Dazu ist es nicht erforderlich, dass die Elektrodenarme nach dem Aufsetzen auf die Mittelelektrode um eine ihrer Dicke entsprechende Distanz in die Elektrode einpresst werden. Bei Einpressen wird nämlich aufgeschmolzenes Material der Mittelelektrode verdrängt, das die Elektrodenarme benetzten kann.

Indem bei dem erfindungsgemäßen Verfahren mit einer Temperatur gearbeitet wird, die unterhalb der Schmelztemperatur der Zündelektrode liegt, entsteht zwischen der Zündelektrode und der Mittelelektrode keine herkömmliche Schweißverbindung, bei der sich die Materialien der verbundenen Werkstücke vermischen. Stattdessen bleibt zwischen der Zündelektrode und dem umgebenden Material der Mittelelektrode eine Grenzfläche bestehen. Auf den beiden Seiten der Grenzfläche liegen unterschiedliche metallurgische Phasen, nämlich verschiedene Materialen vor. Diese Grenzfläche ähnelt in ihren Eigenschaften den Grenzflächen bei Lotverbindungen, bei denen ebenfalls nur eines von zwei beteiligten Materialen, nämlich das Lot, aufgeschmolzen wurde.

Bevorzugt wird für die Zündelektrode Iridium oder eine Iridiumbasisiegierung verwendet. Iridium hat einen vorteilhaft hohen Schmelzpunkt. Eine Zündelektrode aus Iridium oder einer lridiumbasisiegierung kann wegen ihrer hohen Schmelztemperatur den mit einer Bogenentladung verbundenen Belastungen lange Stand halten. Bevorzugt besteht die Zündelektrode einer erfindungsgemäßen Vorkammerzündkerze zu wenigstens 50 Gew.-%, vorzugsweise zu wenigstens 70 Gew.-%, besonders bevorzugt zu wenigstens 90 Gew.-%, insbesondere zu wenigstens 95 Gew.-%, aus Iridium.

Das Material der Mittelelektrode, in welches die Elektrodenarme eingebettet sind, ist vorzugsweise Nickel oder eine Nickelbasislegierung. Bevorzugt besteht das die Elektrodenarme umgebende Material der Mittelelektrode zu wenigstens 50 Gew.-%, vorzugsweise zu wenigstens 60 Gew.-%, besonders bevorzugt zu wenigstens 70 Gew.-%, insbesondere zu wenigstens 80 Gew.-%, aus Nickel.

Bevorzugt enthält die Mittelelektrode einen Kupferkern. Auf diese Weise kann Wärme noch besser von der Zündelektrode abgeleitet werden. Die Zündelektrode kann zum Befestigen an der Mittelelektrode soweit in diese hineingepresst werden, dass die Zündelektrode den Kupferkern berührt. Zwischen der Zündelektrode und dem Kupferkern kann aber auch eine Schicht aus dem für die Außen- und Stirnseite der Mittelelektrode verwendeten Material bleiben. Vorteilhaft wird durch das Einpressen der Zündelektrode in die Mittelelektrode dann zumindest der Abstand zwischen Kupferkern und Zündelektrode reduziert.

Die Zündelektrode ist bevorzugt aus Draht, insbesondere Runddraht. Es kann aber auch Flachdraht verwendet werden oder die Zündelektrode als Stanz-Biegeteil aus Blech hergestellt werden. Bevorzugt hat die Zündelektrode vier oder mehr Elektrodenarme, die von einem gemeinsamen Zentrum ausgehen und beispielsweise kreuzförmig angeordnet sind.

Bevorzugt verläuft der eingebettete Abschnitt der Elektrodenarme im Wesentlichen parallel zur Stirnfläche der Mittelelektrode. Auf diese Weise lässt sich die Zündelektrode beim Einpressen besser handhaben und die Gefahr einer Beschädigung ist reduziert. Vorteilhaft ist insbesondere, wenn der eingebettete Abschnitt der Elektrodenarme mit der Längsrichtung der Mittelelektrode einen Winkel einschließt der von einem rechten Winkel um nicht mehr als 10°, insbesondere nicht mehr als 5°, abweicht. Möglich ist es aber auch, eine Zündelektrode zu verwenden, bei welcher der hintere und der eingebettete Abschnitt der Elektrodenarme schräg nach vorne gerichtet ist und mit der Längsrichtung der Mittelelektrode einen Winkel einschließt, der von einem rechten Winkel beispielsweise um 20° oder mehr abweicht.

Weitere Einzelheiten und Vorteile der Erfindung werden an einem Ausführungsbeispiel unter Bezugnahme auf die beigefügten Zeichnungen erläutert. Es zeigen:
- Fig. 1: ein Ausführungsbeispiel einer erfindungsgemäßen Vorkammerzündkerze;
- Fig. 2: ein Schliffbild eines in die Mittelelektrode eingebetteten Arms der Zündelektrode; und
- Fig.3: eine schematische Ansicht der Mittelelektrode mit daran befestigter Zündelektrode.

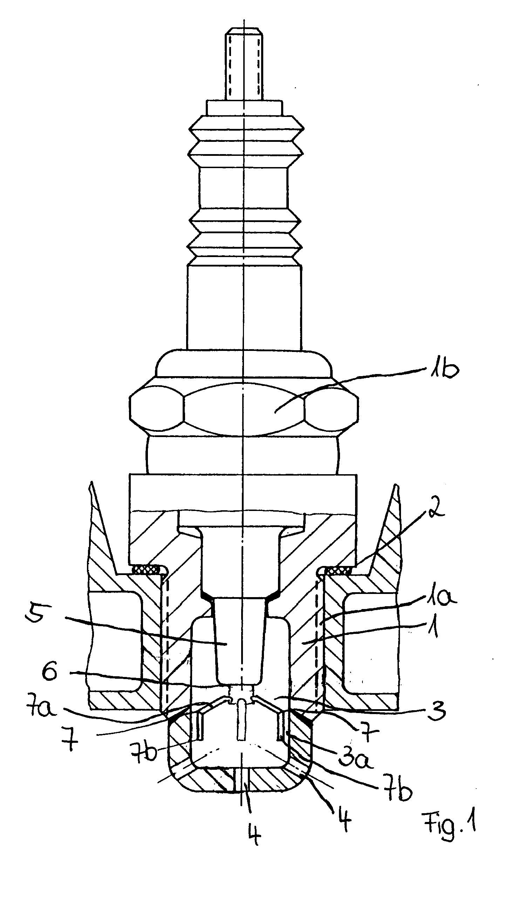

In Figur 1 ist ein Ausführungsbeispiel einer Vorkammerzündkerze eingeschraubt in den Zylinderkopf eines Motors dargestellt. Die Vorkammerzündkerze hat ein Gehäuse 1 mit einem Einschraubgewinde 1 a und einem Sechskant 1 b. Zwischen dem Gehäuse 1 und dem Zylinderkopf ist eine Unterlegscheibe 2 als Dichtung verpresst.

Das Gehäuse 1 weist an seinem vorderen Ende eine Vorkammer 3 mit mehreren Öffnungen 4 auf. In dem Gehäuse 1 ist ein Isolator 5, beispielsweise aus Aluminiumoxid oder einem anderen keramischen Werkstoff, angeordnet, der eine Mittelelektrode 6 umgibt. Die Mittelelektrode 6 trägt eine in der Vorkammer 3 angeordnete Zündelektrode, die mehrere Elektrodenarme 7 aufweist. Die Elektrodenarme 7 haben jeweils einen hinteren Abschnitt 7a, der sich von der Mittelelektrode 6 radial auswärts erstreckt, und einen entlang einer seitlichen Vorkammerwand 3a verlaufenden vorderen, nach vorne gerichteten Abschnitt 7b, der zwischen sich und der Vorkammerwand 3a eine Funkenstrecke bildet.

Bei dem dargestellten Ausführungsbeispiel hat die Zündelektrode vier kreuzförmig angeordnete Elektrodenarme 7. Die Zündelektrode kann aus Draht sein, wobei Runddraht oder auch Flachdraht geeignet ist. Zur Herstellung der Zündelektrode können beispielsweise zwei Drahtabschnitte kreuzförmig aufeinander gelegt und dort wo sie sich berühren mit einander verschweißt werden. Anschließend werden die Enden der Drahtabschnitt durch Biegen aufgestellt. Die aufgestellten Enden bilden dann die vorderen Abschnitte 7b der Elektrodenarme 7. Möglich ist es auch, die Zündelektrode als Stanzbiegeteil aus Blech herzustellen.

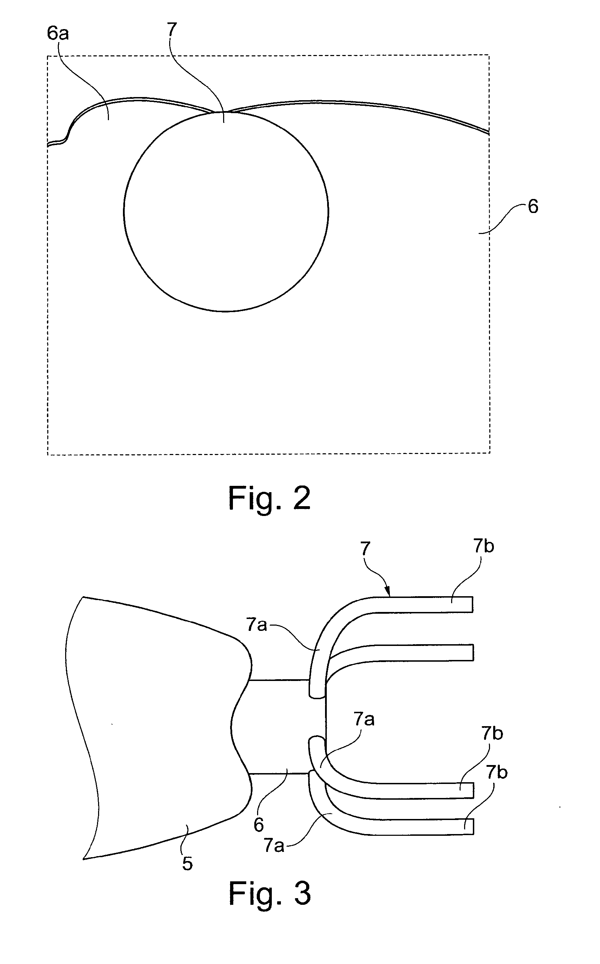

Die Elektrodenarme 7 sind in die Mittelelektrode 6 eingebettet und treten aus einer Seitenfläche der Mittelelektrode 6 aus. Figur 2 zeigt ein Schliffbild eines in die Mittelelektrode 6 eingebetteten Elektrodenarms 7 der Zündelektrode. Der Elektrodenarm 7 ist bei dem dargestellten Ausführungsbeispiel aus Runddraht.

Zur Befestigung an der Mittelelektrode 6 wurde die Zündelektrode auf die Mittelelektrode 6 aufgesetzt und anschließend die Mittelelektrode 6 auf eine Temperatur erhitzt, die zum Aufschmelzen des Materials der Mittelelektrode 6 ausreicht, aber unterhalb der Schmelztemperatur des Materials der Zündelektrode liegt. Die Zündelektrode wurde dann in das aufgeschmolzene Material der Mittelelektrode 6 eingepresst und so dass die Elektrodenarme 7 in die Mittelelektrode 6 eingebettet sind. Dabei wird aufgeschmolzenes Mittelelektrodenmaterial 6a verdrängt, das die Oberseite der eingepressten Elektrodenarme 7 zumindest teilweise bedeckt.

Bei dem in Figur 2 dargestellten Ausführungsbeispiel wurden die Elektrodenarme 7 der Zündelektrode um eine Strecke in die Mittelelektrode 6 hinein gepresst, die größer als die Hälfte der Dicke des eingebetteten Elektrodenarms 7 ist. Material der Mittelelektrode 6 umgibt den Elektrodenarm 7 deshalb auf dem größten Teil seines Umfangs. Bei dem dargestellten Ausführungsbeispiel ist der Elektrodenarm 7 unter Berücksichtigung der verdrängten Schmelze 6a im wesentlichen vollständig umschlossen und von Material der Mittelelektrode 6 bedeckt. Nach dem Abkühlen der Mittelelektrode 6 ist der Elektrodenarm 7 formschlüssig mit der Mittelelektrode 6 verbunden, da das Material der Mittelelektrode 6 um den eingebetteten Elektrodenarm 7 herum greift.

In Figur 3 ist schematisch das aus dem Isolator 5 herausragende Ende der Mittelelektrode 6 mit der daran befestigten Zündelektrode dargestellt. Wie man sieht, treten die Arme 7 der Zündelektrode seitlich aus der Mittelelektrode 6 heraus. Während der vordere Abschnitt 7b der Elektrodenarme 7 in Längsrichtung der Mittelelektrode 6 und damit auch in Längsrichtung der Vorkammerzündkerze ausgerichtet ist, erstrecken sich die hinteren Abschnitte 7a und insbesondere die eingebetteten Abschnitt der Elektrodenarme 7 quer dazu. Bei dem dargestellten Ausführungsbeispiel verlaufen die eingebetteten Abschnitte der Elektrodenarme 7 im Wesentlichen parallel zur Stirnfläche der Mittelelektrode 6.

Als Material für die Zündelektrode sind insbesondere Iridiumbasislegierungen geeignet, beispielsweise Iridium-Rhenium und/oder Iridium-Molybdän Legierungen. Bevorzugt besteht die Zündelektrode zu wenigstens 95 Gew.-% aus Iridium. Vorteilhaft sind insbesondere Beimischungen von bis zu 2 Gew.-% Rhenium und bis zu 1 Gew.-% Molybdän.

Für die Mittelelektrode 6 sind insbesondere Nickelbasislegierungen geeignet. Eine besonders gute Wärmeableitung ermöglichen Mittelelektroden 6, die einen Kupferkern aufweisen. Beim Einbetten der Zündelektrode in eine solche Mittelelektrode 6 kann die Zündelektrode den Kupferkern berühren oder nur mit dem den Kupferkern umgebenden Material der Mittelelektrode 6, also beispielsweise einer Nickelbasislegierung, in Kontakt sein.

### Bezugszahlen

- 1: Gehäuse
- 1a: Einschraubgewinde
- 1b: Sechskant
- 2: Unterlegscheibe
- 3: Vorkammer
- 3a: Vorkammerwand
- 4: Öffnung
- 5: Isolator
- 6: Mittelelektrode
- 6a: verdrängtes Mittelelektrodenmaterial
- 7: Elektrodenarme
- 7a: hinterer Abschnitt
- 7b: vorderer Abschnitt

## Patentansprüche

1. Vorkammerzündkerze mit
einem Gehäuse (1), das an seinem vorderen Ende eine Vorkammer (3) mit mehreren Öffnungen (4) aufweist,
einem in dem Gehäuse (1) angeordneten Isolator (5),
einer von dem Isolator (5) umgebenen Mittelelektrode (6), die eine in der Vorkammer (3) angeordnete Zündelektrode trägt, die mehrere Elektrodenarme (7) aufweist, wobei
die Elektrodenarme (7) jeweils einen hinteren Abschnitt (7a), der sich quer zur Längsrichtung der Mittelelektrode (6) erstreckt, und einen entlang einer Vorkammerwand (3a) verlaufenden vorderen Abschnitt (7b), der zwischen sich und der Vorkammerwand (3a) eine Funkenstrecke bildet, aufweisen,
**dadurch gekennzeichnet, dass** die Elektrodenarme (7) in die Mittelelektrode (6) eingebettet sind und aus einer Seitenfläche der Mittelelektrode (6) herausragen.

2. Vorkammerzündkerze nach Anspruch 1, **dadurch gekennzeichnet, dass** die Zündelektrode aus einem Material besteht, das einen höheren Schmelzpunkt als das Material der Mittelelektrode (6), in welches die Elektrodenarme (7) eingebettet sind, hat.

3. Vorkammerzündkerze nach einem der vorstehenden Ansprüche, **dadurch gekennzeichnet, dass** die Zündelektrode zu wenigstens 50 Gew.-%, vorzugsweise zu wenigstens 70 Gew.-%, besonders bevorzugt zu wenigstens 90 Gew.-%, insbesondere zu wenigstens 95 Gew.-%, aus Iridium besteht.

4. Vorkammerzündkerze nach einem der vorstehenden Ansprüche, **dadurch gekennzeichnet, dass** eine dem hinteren Ende der Mittelelektrode (6) zugewandte Unterseite der Elektrodenarme (7) dort, wo die Elektrodenarme (7) aus der Seitenfläche der Mittelelektrode (6) herausragen, von dem vorderen Ende der Mittelelektrode (6) mehr als die Hälfte der Dicke der Elektrodenarme (7) entfernt ist, vorzugsweise mehr als zwei Drittel der Dicke, insbesondere mehr als drei Viertel der Dicke entfernt ist.

5. Vorkammerzündkerze nach einem der vorstehenden Ansprüche, **dadurch gekennzeichnet, dass** die Elektrodenarme (7) formschlüssig in der Mittelelektrode (6) gehalten sind.

6. Vorkammerzündkerze nach einem der vorstehenden Ansprüche, **dadurch gekennzeichnet, dass** ein in die Mittelelektrode (6) eingebetteter Abschnitt der Elektrodenarme (7) zumindest teilweise von Material der Mittelelektrode (6) bedeckt ist.

7. Vorkammerzündkerze nach einem der vorstehenden Ansprüche, **dadurch gekennzeichnet, dass** die Mittelelektrode (6) einen Kupferkern enthält.

8. Vorkammerzündkerze nach einem der vorstehenden Ansprüche, **dadurch gekennzeichnet, dass** die Elektrodenarme (7) aus Draht sind.

9. Vorkammerzündkerze nach einem der Ansprüche 1 bis 7, **dadurch gekennzeichnet, dass** die Zündelektrode ein Biegeteil aus Blech ist.

10. Vorkammerzündkerze nach einem der vorstehenden Ansprüche, **dadurch gekennzeichnet, dass** die Zündelektrode ein aus mehreren Einzelteilen zusammengefügtes Bauteil ist.

11. Vorkammerzündkerze nach einem der vorstehenden Ansprüche, **dadurch gekennzeichnet, dass** der eingebettete Abschnitt der Elektrodenarme (7) im Wesentlichen parallel zur Stirnfläche der Mittelelektrode (6) verläuft.

12. Verfahren zum Befestigen einer Zündelektrode, die mehrere Elektrodenarme (7) aufweist, an einer Mittelelektrode (6) einer Vorkammerzündkerze, wobei die Zündelektrode auf eine Stirnfläche der Mittelelektrode (6) aufgesetzt wird,
**dadurch gekennzeichnet, dass**
die Stirnfläche der Mittelelektrode (6) auf eine Temperatur aufgeheizt wird, die zum Aufschmelzen des Materials der Mittelelektrode (6) ausreicht, aber unterhalb der Schmelztemperatur des Materials der Zündelektrode liegt, und
die Zündelektrode soweit in das aufgeschmolzene Material der Mittelelektrode (6) eingepresst wird, bis die Elektrodenarme (7) auf dem größten Teil ihres Umfangs von Material der Mittelelektrode (6) umschlossen sind und aus einer Seitenfläche der Mittelelektrode (6) herausragen.
